# EUROPEAN PATENT SPECIFICATION

(11) **EP 2 700 861 B1**
(45) Date of publication and mention of the grant of the patent: **05.10.2016**
(21) Application number: 12774512.3
(22) Date of filing: 25.04.2012
(51) Int. Cl.: F16L 19/028, F16L 19/00, F16L 19/03, F16L 19/02

(54) **CONNECTION METHOD FOR THIN WALL METAL PIPE AND PIPE JOINT**
VERBINDUNGSVERFAHREN FÜR DÜNNWANDIGE METALLROHRE UND ROHRVERBINDUNG
PROCÉDÉ DE LIAISON POUR TUYAU MÉTALLIQUE À PAROI MINCE ET JOINT DE TUYAU

(43) Date of publication of application: 26.02.2014
(73) Proprietor: Pang, Haohui, Foshan, Guangdong 528000 (CN); Shi, Zhaohui, No. 27-1, Baoshui District Zhuhai Guangdong 519000 (CN)
(72) Inventor: Pang, Haohui, Foshan, Guangdong 528000 (CN)
(74) Representative: Hryszkiewicz, Danuta
(86) International application number: PCT/CN2012/000558
(87) International publication number: WO 2012/142862

(56) References cited:
- EP-A1- 0 593 325
- WO-A1-02/055917
- CN-A- 1 945 086
- CN-A- 101 660 641
- CN-Y- 201 034 220
- CN-Y- 201 050 648
- CN-Y- 201 152 413
- GB-A- 2 207 722
- US-A- 2 463 883
- US-A- 5 516 156

## Description

The invention relates to the connection of liquid and gas conveying pipes, and more particularly to a method for connection of thin-walled metal pipes.

After several years' utilization, plastic pipes are apt to bend, deform, crack, or even break due to the deterioration of the physical properties. Conventional galvanized pipes have poor chemical properties such as unhealthiness, short service life, and pollute the water. Since 1997, plastic pipes and galvanized pipes have been forbidden for use in water supply pipes in China. With the continuous improvement of people's living standards, healthy, environmentally friendly, durable, and beautiful thin-walled stainless steel pipes, with good physical and chemical properties, have been widely used in Germany, Japan and other countries. In China, since 2002, the thin-walled stainless steel pipes have been gradually used for water supply in high-grade buildings, with favorable application effects.

However, thin-walled stainless steel pipes are difficult for assembly and disassembly, which limits the popularization thereof. Typically, metal pipes are connected by press fitting or socket welding, both of which require excellent assembly skills and high labor intensity. In case of leakage or shifting pipelines during pipe layering, the pipes cannot be disassembled and must be cut with the help of special tools, thereby producing high costs, and the operation requires a large space.

Flexible connections achieved by ring expansion connection solve the difficulty of assembly and disassembly of pipes to some extent. However, the ring expansion connection has the following disadvantages: 1) soldered side seams of thin-walled pipes are prone to cracking in the process of ring expansion; 2) Furthermore, in the case of leakage during pipe layering, ring expansion cannot be carried out on the ends of the pipes.

In view of the above-described problems, the invention provides in one aspect a method for connecting a thin-walled metal pipe and a joint. The method is convenient in assembly, disassembly, and maintenance, and prevents the metal pipes from cracking. There is also a space provided between the metal pipe and the joint for buffering the thermal expansion of the metal pipe in case of temperature fluctuations.

A method for connecting a thin-walled metal pipe and a joint according to the preamble of claim 1 is known from CN 101660641 A.

Another relevant method is known from prior art CN 201152413 Y disclosing a method involving an annular bulge of the pipe wall.

In accordance with the invention, there is provided a method for connecting a thin-walled metal pipe and a joint according to claim 1.

The pliers can work out a boss on the pipe wall quickly and cause no destruction to pipes, and no need of invasive operations such as press fitting, socket welding, and ring expansion. Each pipe is in flexible connection, which is convenient for assembly and disassembly, requiring low labor intensity. The method has high operability, flexibility, and practicality. By the interaction of the female thread of the joint and the socket ring, the connection is made reliable, stable, and sealed. The method for making the connection is simple, time and material saving, and requires little space for operation. In case of temperature fluctuation, the space between the metal pipe and the joint provides sufficient axial extension, thereby buffering the thermal expansion of the metal pipe.

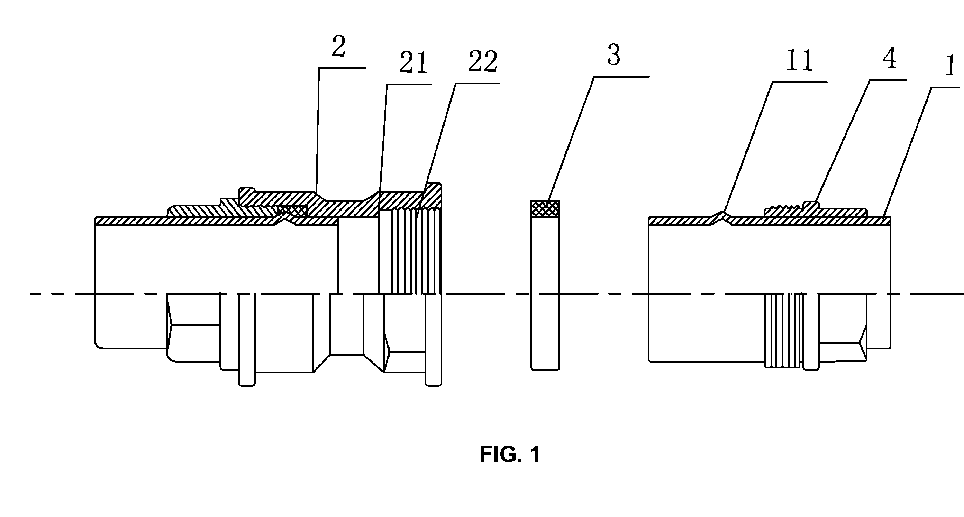

FIG. 1 is an exploded view of a connection of a thin-walled metal pipe and a joint of the invention.

As shown in FIG. 1, a connection of a thin-walled metal pipe and a joint comprises a thin walled stainless steel pipe 1, a joint 2, a rubber sealing ring 3, and a socket ring 4. One end of the pipe 1 is pressed by a pair of pliers to yield a boss 11. An inner wall of the joint 2 is provided with a step 21 cooperating with the sealing ring 3. The internal wall of the joint 2 comprises female thread 22 corresponding to the socket ring 4.

Upon assembly, the socket ring 4 is sleeved on the pipe 1. One end of the pipe 1 is pressed by a pair of pliers to yield the boss 11. The sealing ring 3 is sleeved on the metal pipe 1 in front of the boss 11, and then inserted into the joint 2. The socket ring 4 is tightened along the female thread 22 of the joint 2, so that the socket ring 4 leans against the boss 11 and extrudes the sealing ring 3 to press the step 21 of the joint 2 to form a sealed connection. In this way, a space between the step 21 at the bottom of the joint 2 and an end face of the socket ring 4 is between 2-5 mm larger than a diameter of the boss 11. Thus, in case of temperature fluctuation, the space between the metal pipe and the joint provides sufficient axial extension, thereby buffering the thermal expansion of the metal pipe.

## Claims

1. A method for connecting a thin-walled metal pipe and a joint, the method comprising:
a)providing a thin-walled metal pipe (1), a joint (2) comprising an inner wall comprising female thread (22), a sealing ring (3), and a socket ring (4), wherein the inner wall of the joint (2) is provided with a step (21) cooperating with the sealing ring (3);
b)forming a protruding block having a triangular cross section on one end of the thin-walled metal pipe (1);
c) sleeving the sealing ring (3) and the socket ring (4) on the thin-walled metal pipe (1) from two opposite directions of the protruding block (11); and
d) inserting the metal pipe (1) sleeved with the socket ring (4) and the sealing ring (3) into the joint (2);
**characterized in that**
forming a protruding block (11) in b) comprises pressing the one end of the thin-walled metal pipe (1) by a pair of pliers and forming a protruding block (11) comprising two slope surfaces respectively facing the socket ring (4) and the sealing ring (3); and
after d), the method further comprises e) leaning the socket ring (4) against the protruding block (11), directly contacting the sealing ring (3) with the socket ring (4), and pressing the sealing ring (3) by the socket ring (4); and e) is performed by screwing the socket ring (4) along the female thread (22) of the joint (2) and tightening the socket ring (4).

2. The method of claim 1, **characterized in that** the protruding block (11) is one or two in number, the protruding blocks (11) are distributed equidistantly or not equidistantly.

3. The method of claim 2, **characterized in that** a space between the protruding block (11) and the end of the thin-walled metal pipe (1) is less than or equal to 60 mm, the space between each protruding block (11) and the end is the same, and a height of the protruding block (11) in relation to an outer surface of the thin-walled metal pipe (1) is less than or equal to 6 mm.

4. The method of claim 1, **characterized in that** when the socket ring (4) is screwed and engaged with the joint (2) under the action of the female thread (22), the protruding block (11) is surrounded by the joint (2), a spanner is employed to tighten the socket ring (4), and a space between the step (21) and an end face of the socket ring (4) is at least 2 mm larger than a diameter of the protruding block (11).

## Patentansprüche

1. Verfahren zum Verbinden eines dünnwandigen Metallrohrs und eines Verbinders, wobei das Verfahren Folgendes umfasst:
a) Vorsehen eines dünnwandigen Metallrohrs (1), eines Verbinders (2) mit einer mit einem weiblichen Gewinde (22) versehenen Innenwand, einem Dichtring (3) und einem Sockelring (4), wobei die Innenwand des Verbinders (2) mit einer mit dem Dichtring (3) zusammenwirkenden Stufe (21) versehen ist;
b) Bilden eines vorstehenden Blocks mit einem dreieckigen Querschnitt an einem Ende des dünnwandigen Metallrohrs (1);
c) Aufschieben des Dichtrings (3) und des Sockelrings (4) auf das dünnwandige Metallrohr (1) aus zwei entgegengesetzten Richtungen des vorstehenden Blocks (11); und
d) Einstecken des Metallrohrs (1) mit aufgeschobenem Sockelring (4) und Dichtring (3) in den Verbinder (2);
**dadurch gekennzeichnet, dass**
das Bilden eines vorstehenden Blocks (11) in Schritt b) das Verpressen des einen Endes des dünnwandigen Metallrohrs (1) mit einer Zange umfasst, wobei ein vorstehender Block (11) mit zwei schrägen Flächen gebildet wird, die dem Sockelring (4) bzw. dem Dichtring (3) zugewandt sind; und
nach Schritt d) das Verfahren ferner e) das Anlegen des Sockelrings (4) an den vorstehenden Block (11) umfasst, wobei der Dichtring (3) direkt mit dem Sockelring (4) in Kontakt kommt und der Dichtring (3) durch den Sockelring (4) verpresst wird; und Schritt e) durch Anschrauben des Sockelrings (4) entlang dem weiblichen Gewinde (22) des Verbinders (2) und Anziehen des Sockelrings (4) ausgeführt wird.

2. Verfahren nach Anspruch 1, **dadurch gekennzeichnet, dass** der vorstehende Block (11) einfach oder zweifach vorgesehen wird, wobei die vorstehenden Blöcke (11) äquidistant oder nicht äquidistant verteilt sind.

3. Verfahren nach Anspruch 2, **dadurch gekennzeichnet, dass** ein Raum zwischen dem vorstehenden Block (11) und dem Ende des dünnwandigen Metallrohrs (1) kleiner als oder gleich 60 mm ist, wobei der Raum zwischen jedem vorstehenden Block (11) und dem Ende gleich ist, und eine Höhe des vorstehenden Blocks (11) in Bezug auf eine Außenfläche des dünnwandigen Metallrohrs (1) kleiner als oder gleich 6 mm ist.

4. Verfahren nach Anspruch 1, **dadurch gekennzeichnet, dass**, wenn der Sockelring (4) aufgeschraubt wird und mit dem Verbinder (2) unter der Wirkung des weiblichen Gewindes (22) in Eingriff kommt, der vorstehende Block (11) von dem Verbinder (2) umgeben wird, wobei ein Schlüssel zum Anziehen des Sockelrings (4) eingesetzt wird, und ein Raum zwischen der Stufe (21) und einer Endfläche des Sockelrings (4) mindestens 2 mm größer als ein Durchmesser des vorstehenden Blocks (11) ist.

## Revendications

1. Procédé de raccordement d'un tuyau métallique à parois minces et d'un joint, le procédé comprenant de:
a)fournir un tuyau métallique à parois minces (1), un joint (2) comprenant une paroi intérieure comprenant un filetage femelle (22), une bague d'étanchéité (3) et une bague de manchon (4), dans lequel la paroi intérieure du joint (2) est pourvue d'un gradin (21) coopérant avec la bague d'étanchéité (3);
b)former un bloc protubérant ayant une section transversale triangulaire sur une extrémité du tuyau métallique à parois minces (1);
c) gainer la bague d'étanchéité (3) et la bague de manchon (4) sur le tuyau métallique à parois minces (1) à partir de deux directions opposées du bloc protubérant (11) ; et
d) insérer le tuyau métallique (1) gainé avec la bague de manchon (4) et la bague d'étanchéité (3) dans le joint (2);
**caractérisé en ce que**
former un bloc protubérant (11) dans b) comprend de presser une extrémité du tuyau métallique à parois minces (1) par une paire de pinces et former un bloc protubérant (11) comprenant deux surfaces inclinées faisant face respectivement à la bague de manchon (4) et à la bague d'étanchéité (3) ; et
après d), le procédé comprend en outre de e) pencher la bague de manchon (4) contre le bloc protubérant (11), en contactant directement la bague d'étanchéité (3) avec la bague de manchon (4), et presser la bague d'étanchéité (3) par la bague de manchon (4) ; et e) est effectué en vissant la bague de manchon (4) le long du filetage femelle (22) du joint (2) et en serrant la bague de manchon (4).

2. Procédé selon la revendication 1, **caractérisé en ce que** le bloc protubérant (11) est au nombre de un ou deux, les blocs protubérants (11) sont distribués de manière équidistante ou non équidistante.

3. Procédé selon la revendication 2, **caractérisé en ce que** un espace entre le bloc protubérant (11) et l'extrémité du tuyau métallique à parois minces (1) est inférieur ou égal à 60 mm, l'espace entre chaque bloc protubérant (11) et l'extrémité est le même, et une hauteur du bloc protubérant (11) relativement à une surface extérieure du tuyau métallique à parois minces (1) est inférieur ou égal à 6 mm.

4. Procédé selon la revendication 1, **caractérisé en ce que** lorsque la bague de manchon (4) est vissée et mise en prise avec le joint (2) sous l'action du filetage femelle (22), le bloc protubérant (11) est entouré par le joint (2), une clé est employée pour serrer la bague de manchon (4) et un espace entre le gradin (21) et une face d'extrémité de la bague de manchon (4) est au moins 2 mm plus grand qu'un diamètre du bloc protubérant (11).
